(19)

Europäisches Patentamt

European Patent Office

Office européen des brevets

(11) **EP 2 037 298 A1**

(12) **EUROPEAN PATENT APPLICATION**
published in accordance with Art. 153(4) EPC

(43) Date of publication:
**18.03.2009 Bulletin 2009/12**

(21) Application number: **07767246.7**

(22) Date of filing: **20.06.2007**

(51) Int Cl.:
**G02B 1/11** (2006.01)     **G02B 5/02** (2006.01)
**G02B 7/02** (2006.01)

(86) International application number:
**PCT/JP2007/062408**

(87) International publication number:
**WO 2008/001662 (03.01.2008 Gazette 2008/01)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **30.06.2006 JP 2006181458**

(71) Applicant: **Panasonic Corporation**
**Kadoma-shi**
**Osaka 571-8501 (JP)**

(72) Inventors:
• **YAMADA, Kazuhiro**
  **c/o Panasonic Corp. IPROC**
  **Osaka 540-6207 (JP)**
• **TANAKA, Yasuhiro**
  **c/o Panasonic Corp. IPROC**
  **Osaka 540-6207 (JP)**
• **YAMAGATA, Michihiro**
  **c/o Panasonic Corp. IPROC**
  **Osaka 540-6207 (JP)**

(74) Representative: **Grünecker, Kinkeldey, Stockmair & Schwanhäusser**
**Anwaltssozietät**
**Leopoldstrasse 4**
**80802 München (DE)**

(54) **OPTICAL MEMBER AND OPTICAL DEVICE COMPRISING THE SAME**

(57)     The present disclosure relates to an optical member and an optical device including the optical member. More particularly, the present disclosure relates to an optical member whose surface is configured to be an antireflection concave-convex structure for suppressing reflection of incident light, and an optical device including the optical member.

The present invention provides an antireflection concave-convex structure having an excellent environmental resistance.

An optical member (antireflection concave-convex structure) (1) includes: an optical member body (10); and a protective film (20) covering a surface (10a) of the optical member body (10) and transmitting the incident light. On the surface (10a) of the optical member body (10), a plurality of fine convex portions (12) are arranged to form an antireflection concave-convex structure (11) for suppressing reflection of incident light.

FIG. 2

EP 2 037 298 A1

## Description

TECHNICAL FIELD

The present disclosure relates to an optical member and an optical device including the optical member and, more particularly relates to an optical member in which an antireflection concavo-convex structure for suppressing reflection of incident light is formed on its surface and an optical device including the optical member.

BACKGROUND ART

In recent years, there have been proposed various kinds of optical elements in which antireflection processing for suppressing reflection of light is performed to a surface. As antireflection processing, for example, processing in which an antireflection film is formed of a film (low refractive index film) having a relatively low refractive index, a multilayer film including a low refractive index film and a film (high refractive index film) having a relatively high refractive index which are alternately stacked, or the like on a surface of an optical element (see, for example, Patent Document 1 and the like).
However, to form a low refractive index film or an antireflection multilayer film, a complicated step such as vapor deposition, sputtering or the like has to be performed. Therefore, there arises a problem in which productivity is low and cost is high. Moreover, there is another problem in which a low refractive index film or an antireflection film formed of a multilayer film has an antireflection property exhibiting large dependency on wavelength and incident angle.
In view of the above-described problems, as antireflection processing with which the dependency on incident angle and wavelength, which is an antireflection property, is relatively low, for example, processing in which a fine structure (for example, a fine structure including filiform concaves and filiform convexes regularly arranged, a fine structure including cone concaves and cone convexes regularly arranged, or the like and such a structure in which such fine structure units are arranged will be hereinafter referred to an "antireflection concave-convex structure: SWS (Subwavelength Structured Surface)" occasionally) is formed on an optical element surface so that concaves/convexes are regularly formed with a pitch equal to or smaller than a wavelength of incident light has been proposed (see, for example, Non-Patent Documents 1 and 2, and the like). With SWS formed on an optical element surface, abrupt change in refractive index at an interface can be suppressed and a moderate distribution of refractive index can be formed at the interface. Accordingly, a high antireflection effect can be achieved by processing described in Patent Documents 1 and 2.

Patent Document 1: Japanese Laid-Open Publication No. 2001-127852
Non-Patent Document 1: Daniel H. Raguin and G. Michael Morris, Analysis of antireflection-structured surfaces with continuous one-dimensional surface profiles

DISCLOSURE OF INVENTION

PROBLEMS THAT THE INVENTION IS TO SOLVE

However, an optical member (which will be hereinafter referred to an "antireflection structure body" occasionally) in which an SWS is formed on its surface has a problem in which its environmental resistance (such as mechanical resistance and chemical resistance) is not sufficient and it has a short product lifetime. Particularly, when the antireflection structure body is formed of glass, its chemical resistance (such as water resistance, acid resistance and the like) is very poor, and a white or blue burn mark and the like might be generated.
In view of the above-described problems, the present invention has been devised and provides an antireflection structure body having an excellent environmental resistance.

SOLUTION TO THE PROBLEMS

To solve the above-described problems, an optical member according to the present disclosure is characterized by including: an optical member body whose surface is configured to be an antireflection concave-convex structure for suppressing reflection of incident light, formed of a plurality of fine convex or concave portions regularly arranged; and a protective film covering the surface and transmitting the incident light.
In this specification, "transmitting incident light" conceptually means not only transmitting incident light at a transmittance of substantially 100% but also transmitting incident light at a transmittance of a certain level (for example, 10%) or more.
An optical device according to the present disclosure is characterized by including the optical member according to the present disclosure.

ADVANTAGES OF THE INVENTION

According to present disclosure, an antireflection structure body having an excellent environmental resistance can be achieved.

BRIEF DESCRIPTION OF DRAWINGS

[FIG. 1] FIG. 1 is a plan view of an optical member (antireflection structure body) 1 according to Embodiment 1 of the present invention.
[FIG. 2] FIG. 2 is a cross-sectional view of part taken along a cut out line II-II of FIG. 1.
[FIG. 3] FIG. 3 is a graph showing the correlation between the reflectivity of the optical member 1 for incident light which enters the optical member 1 at an incident angle of 0° and a wavelength of the incident light, when a cycle A is 300 nm, a refractive index of the optical member body 10 for light having a wavelength of 589 nm is 2.00136, a refractive index of the protective film 20 for light having a wavelength of 589 nm is 1.37986, $t_1$ is 150 nm, $t_2$ is 110 nm and a diameter f of an apex of each convex portion 12 is 90.5 nm.
[FIG. 4] FIG. 4 is a graph showing the correlation between an incident angle of incident light (having a wavelength of 589 nm) and the reflectivity under the same condition as in FIG. 3
[FIG. 5] FIG. 5 is a graph showing the correlation between the reflectivity of the optical member 1 for incident light which enters the optical member 1 at an incident angle of 0° and a wavelength of the incident light, when a cycle ∧ is 300 nm, a refractive index of the optical member body 10 for light having a wavelength of 589 nm is 2.00136, a refractive index of the protective film 20 for light having a wavelength of 589 nm is 1.37986, $t_1$ is 150 nm, $t_2$ is 140 nm and a diameter f of an apex of each convex portion 12 is 135 nm.
[FIG. 6] FIG. 6 is a graph showing the correlation between the incident angle of incident light (having a wavelength of 589 nm) and the reflectivity under the same condition as in FIG. 5.
[FIG. 7] FIG. 7 is a cross-sectional view of an optical member 2 according to Modified Example 1.
[FIG. 8] FIG. 8 is a plan view of an optical member 3 according to Embodiment 2 of the present invention.
[FIG. 9] FIG. 9 is a cross-sectional view of part taken along a cut out line IX-IX of FIG. 8.
[FIG. 10] FIG. 10 is a graph showing the correlation between the reflectivity of the optical member 3 for incident light which enters the optical member 3 at an incident angle of 0° and a wavelength of the incident light, when a cycle ∧ is 300 nm, a refractive index of the optical member body 10 for light having a wavelength of 589 nm is 1.51674, a refractive index of the protective film 20 for light having a wavelength of 589 nm is 1.10000, $t_1$ is 150 nm, $t_2$ is 40 nm and each convex portion 12 is formed so as to have a shape along $y = -ax^2$ (where a is an arbitrary constant).
[FIG. 11] FIG. 11 is a graph showing the correlation between an incident angle of incident light (having a wavelength of 589 nm) and reflectivity under the same condition as in FIG. 10.
[FIG. 12] FIG. 12 is a cross-sectional view of an optical member 4 according to Modified Example 2.

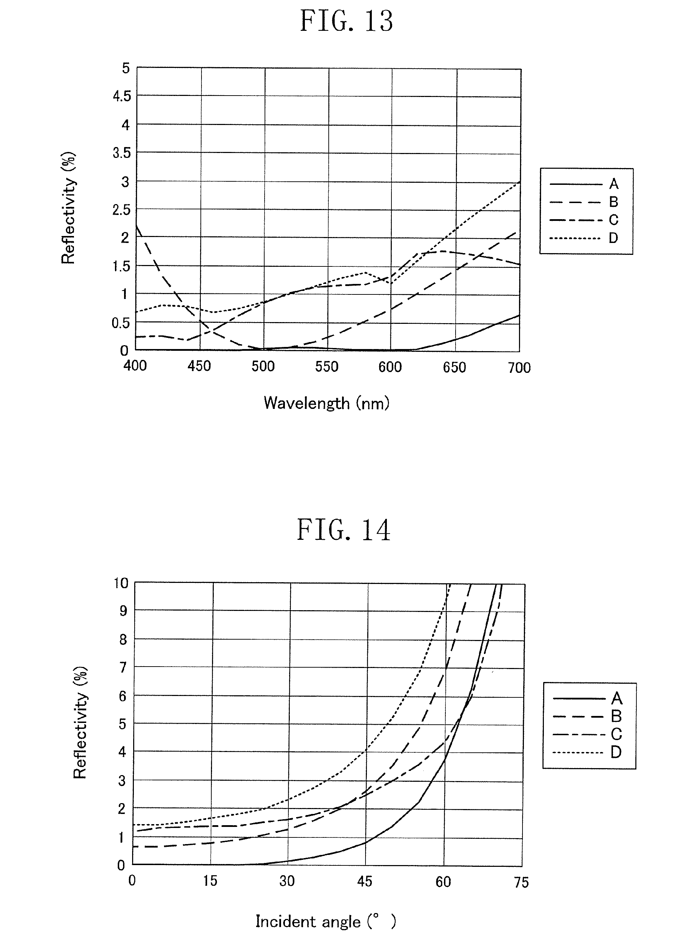

[FIG. 13] FIG. 13 is a graph showing the correlation between the reflectivity of the optical member 4 for incident light which enters the optical member 3 at an incident angle of 0° and a wavelength of the incident light, when a cycle A is 300 nm, a refractive index of the optical member body 10 for light having a wavelength of 589 nm is 2.00136, a refractive index of the protective film 20 for light having a wavelength of 589 nm is 1.49169, $t_1$ is 300 nm, $t_2$ is 89 nm, $t_3$ is 243 nm and each convex portion 12 is formed so as to have a shape along $y = -ax^2$ (where a is an arbitrary constant).
[FIG. 14] FIG. 14 is a graph showing the correlation between an incident angle of incident light (having a wavelength of 589 nm) and reflectivity under the same condition as in FIG. 13.
[FIG. 15] FIG. 15 is a diagram illustrating a configuration of major part of an imaging device 5 according to Embodiment 3 of the present invention.
[FIG. 16] FIG. 16 is a perspective view of a lens tube 31.
[FIG. 17] FIG. 17 is an enlarged cross-sectional view of part of the lens tube 31.
[FIG. 18] FIG. 18 is a diagram illustrating a configuration of major part of an optical pickup system 6 according to Embodiment 4 of the present invention.
[FIG. 19] FIG. 19 is a cross-sectional view of an objective lens 46.

EXPLANATION OF REFERENCE NUMERALS

1, 2, 3, 4          Optical member

| | |
|---|---|
| 5 | Imaging device |
| 6 | Optical pickup |
| 10 | Optical member body |
| 11, 36, 49 | Antireflection concave-convex structure (SWS) |
| 12 | Convex portions |
| 20, 38, 51a, 51b | Protective film |
| 30 | Lens tube unit |
| 31 | Lens tube |
| 32 | Image formation optical system |
| 33 | Device body |
| 34 | Imaging element |
| 35 | Lens tube body |
| 37 | Filiform convex portions |
| 41 | Laser beam |
| 42 | Collimator |
| 43 | Beam splitter |
| 45 | Detector |
| 46 | Objective lens |
| 47 | Information recording medium |
| 47a | Information recording surface |
| 48 | Lens body |
| 50 | Cone convex portions |

BEST MODE FOR CARRYING OUT THE INVENTION

Hereinafter, embodiments of the present invention will be described in detail with reference to the accompanying drawings.

(Embodiment 1)

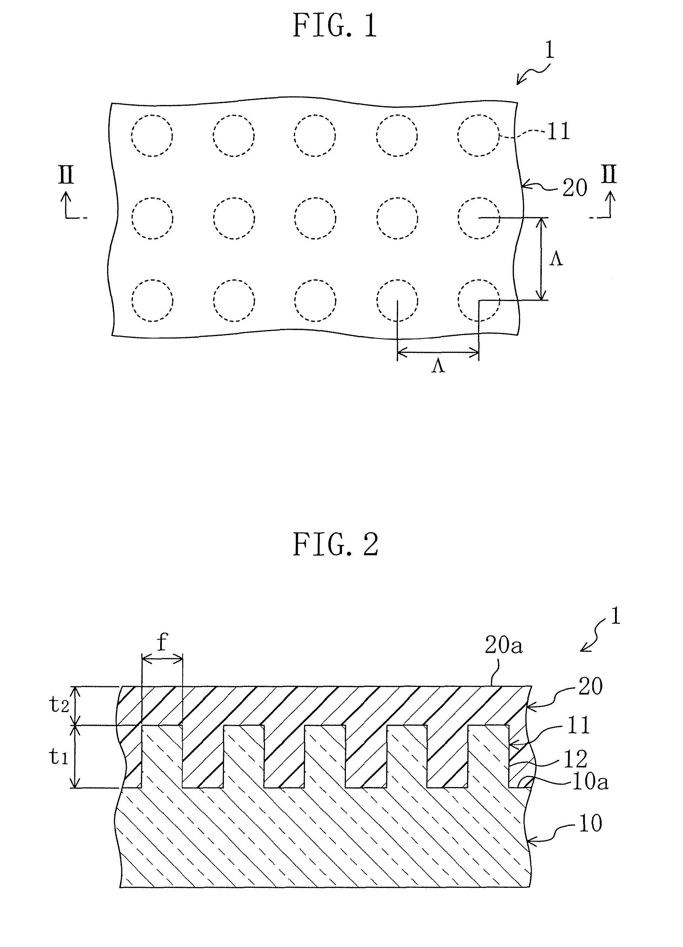

FIG. 1 is a plan view of an optical member (i.e., antireflection structure body) 1 according to Embodiment 1 of the present invention.
FIG. 2 is a cross-sectional view of part taken along a cut out line II-II of FIG. 1.
An optical member 1 according to Embodiment 1 includes a flat, light-transmissive optical member body 10 (which transmits incident light) and a light-transmissive protective film 20 (which transmits incident light). An antireflection concave-convex structure (which will be hereinafter referred to an "SWS" occasionally) 11 formed of a plurality of fine convex portions 12 arranged, for suppressing reflection of incident light, is provided on a surface 10a of the optical member body 10. Note that as long as the antireflection concave-convex structure 11 has a shape which allows a moderate change in refractive index in the vicinity of the surface 10a of the optical member body 10, the shape is not particularly limited. For example, the convex portions 12 may be formed so that each of the convex portions 12 has a circular conical shape, a pyramidal shape, a circular column shape, a prismatic column shape, a circular truncated conical shape, a domal shape, or a truncated pyramidal shape. Also, the antireflection concave-convex structure 11 may be formed so that a plurality of concave portions each having a circular conical shape, a pyramidal shape, a circular column shape, a prismatic column shape, a circular truncated conical shape, a domal shape, or a truncated pyramidal shape are arranged therein or so that a plurality of filiform convex portions or filiform concave portions extending in parallel to one another are arranged therein.
The surface 10a on which the SWS 11 is provided is covered by a protective film 20. Therefore, a high environment resistance of the optical member 1 can be achieved. Without the protective film 20, the fine convex portions 12 are easily deformed or damaged by collision with some other member and the like. However, when the fine convex portions 12 are covered by the protective film 20, deformation and damage of the fine convex portions 12 caused by collision of the fine convex portions 12 with some other member and the like can be effectively suppressed. As a result, a high mechanical resistance can be achieved.
For example, when the protective film 20 having a higher chemical resistance than that of the optical member body 10 is used, chemical deformation (such as a burn mark and the like) of the optical member 1 can be effectively suppressed, and the optical member 1 having a high mechanical resistance and also a high chemical resistance can be achieved. Particularly, when the optical member body 10 is formed of glass which can be chemically denatured easily, the protective film 20 is preferably formed of a resin or the like which has a relatively high chemical resistance on the surface 10a. Thus, the optical member body 10 formed of glass can be shut off from air (for example, oxygen, moisture or the like) and chemical denaturation of the optical member body 10 and the like can be effectively suppressed. Accordingly, the optical member 1 can be made to have a relatively long lifetime. Note that in this specification, "high chemical resistance" means high resistance to water and/or acid.

When a refractive index of the protective film 20 for a wavelength of incident light is set to be lower than a refractive index of the optical member body 10, a reflectivity of the optical member 1 can be reduced. For example, assume that a reflectivity of an optical member having a high refractive index at its surface is $R_1$. Where a low refractive index layer having a lower reflectivity than that of the optical member is formed on the surface of the optical member, a reflectivity $R_2$, which is a sum of a reflectivity of the optical member at its surface and a reflectivity thereof at the low refraction index layer, is smaller than $R_1$. That is, by providing a layer having a lower refractive index than a refractive index of the optical member 1 on the surface of the optical member, the sum of reflectivities of the optical member can be reduced. This reflectivity reduction effect increases as the number of low refractive index layers (which are designed so that a refractive index of a layer is lower at a more distance from the optical member body 10) to be stacked on an optical member increases. In Embodiment 1, the SWS 11 is formed on the surface 10a of the optical member body 10. Then, furthermore, the protective film 20 is formed so as to cover the surface 10a. An effective refractive index of superficial layer part on which the SWS 11 is formed is an intermediate value between a refractive index of a material itself of the optical member body 10 and a refractive index of a material itself of the protective film 20. Therefore, according to Embodiment 1, it is possible to obtain, by forming the SWS 11 on the surface 10a, and then providing the protective film 20 having a lower refractive index than the refractive index of the optical member body 10 on the surface 10a, a state in which a layer (i.e., superficial layer part on which the SWS 11 is formed) having a lower refractive index than the refractive index of the optical member body 10 is formed on the surface 10a and another layer (i.e., part located on the SWS 11 and formed of only the protective film 20) having a lower refractive index than the refractive index of the former layer is formed on the former layer. As a result, the reflectivity of the optical member 1 can be further reduced, compared to the case where the SWS 11 is formed on the surface 10a but the protective film 20 is not formed thereon and the case where the SWS 11 is not formed and only the protective film 20 is formed.

Furthermore, the protective film 20 is preferably formed so as to have a thickness which causes a difference between a phase of reflection light at a surface 20a of the protective film 20 and a phase of reflection light at the surface 10a of the optical member body 10 by half of a wavelength of incident light. Specifically, the protective film 20 is preferably formed so as to have a thickness which causes a substantial optical path difference between reflection light at the surface 10a of the optical member body 10 and reflection light at the surface 20a of the protective film 20 by 1/2 of a wavelength of incident light. This causes interference of reflection light generated at the surface 20a of the protective film 20 and reflection light generated at the surface 10a of the optical member body 10 to weaken the reflection lights. As a result, the reflectivity of the optical member 1 can be further reduced. In such case, it is particularly preferable that the shape of the antireflection concave-convex structure 11 is changed to substantially equalize the light intensity of reflection light generated at the surface 10a of the optical member body 10 and the light intensity of reflection light generated at the surface 20a at the protective film 20. Thus, the generation of reflection light can be substantially prevented. That is, a non-reflecting structure body can be achieved.

By adjusting the thickness of the protective film 20, a reflectivity at a certain wavelength can be selectively reduced and the wavelength dependency can be reduced.

Hereafter, a specific structure of the optical member 1 of Embodiment 1 will be described in detail with reference to FIG. 1 and FIG. 2.

In Embodiment 1, the optical member body 10 is substantially formed of glass, and the antireflection concave-convex structure 11 is formed on the surface 10a of the optical member body 10. The antireflection concave-convex structure 11 is formed of a plurality of circular column convex portions 12 which are regularly arranged. More specifically, in Embodiment 1, the plurality of convex portions 12 are (squarely) arranged in matrix so as to be separated from one another with a cycle (pitch) A equal to or smaller than a wavelength of incident light (which is, specifically, a shortest wavelength of the incident light if the incident light is not a single wavelength light). A height $t_1$ of the convex portions 12 is set to be 0.4 or more times as large as a wavelength of incident light (which is, specifically, 0.4 or more times as large as a largest wavelength of the incident light if the incident light is not a single wavelength light). Thus, a layer of which a refractive index moderately changes is formed in superficial layer part of the surface 10a, and reflection of incident light coming into the surface 10a through the protective film 20 can be effectively suppressed.

Note that according to Embodiment 1, even when each of the convex portions 12 has a column shape, an actual refractive index of the superficial layer part in which the convex portions 12 exist can be reduced by providing the convex portions 12. Therefore, reflection of incident light can be effectively suppressed.

On the surface 10a, the protective film 20 is formed of, substantially, resin, so as to cover the surface 10a. Specifically, in Embodiment 1, the protective film 20 is formed to fill each concave portion provided between the arranged plurality of convex portions 12, so that a surface 20a of the protective film 20 located at the other side opposite to the optical member body 10 side becomes a smooth surface (which is a uniform surface, a flat smooth surface or the like in Embodiment 1). Thus, with the protective film 20, the convex portions 12 are protected from impacts and vibrations from the outside and deformation and damages of the convex portions 12 can be effectively suppressed. Therefore, a high mechanical resistance can be achieved.

In general, a chemical resistance (resistance to water and acid) of glass is low, and when a glass material is exposed, a white or blue burn mark is generated. In contrast, a chemical resistance of resin is higher than that of glass. Thus, with the optical member body 10 covered with the protective film 20 substantially formed of resin, chemical denaturation (such as a burn mark and the like) of the optical member body 10 substantially formed of glass can be effectively suppressed.

In Embodiment 1, the protective film 20 has a lower refractive index for a wavelength of incident light than that of the optical member body 10. Thus, as described above, two layers each having a lower refractive index than that of the optical member body 10 are stacked on the surface 10a of the optical member body 10. Therefore, reflectivity of the optical member 1 can be effectively reduced.

A distance (which is defined as a thickness of the protective film 20 in this specification) $t_2$ from an apex of each convex portion 12 to the surface 20a correlates with both of the reflectivity of the optical member 1 and the wavelength dependency of the reflectivity of the optical member 1. For example, when incident light is single wavelength light, the thickness $t_2$ of the protective film 20 is set so that a difference between a phase of reflection light generated at the surface 10a of the optical member body 10 and a phase of reflection right generated on the surface 20a of the protective film 20 is half (1/2) of a wavelength of incident light. This causes interference of reflection light generated at the surface 10a and reflection light generated at the surface 20a and reduces the intensities of the reflection lights. Thus, in the above-described manner, reflectivity of the optical member 1 for incident light having a certain wavelength can be effectively reduced by setting the thickness $t_2$ of the protective film 20. In this case, it is particularly preferable to set the height $t_1$ of the convex portions 12 so that a light intensity of reflection light generated at the surface 10a and a light intensity of reflection light generated at the surface 20a of the protective film 20 are substantially equal to each other. Thus, the reflectivity of the optical member 1 can be substantially zero.

However, when the thickness $t_2$ of the protective film 20 is set in the above-described manner, for incident light having a different wavelength, a difference between a phase of reflection light generated at the surface 10a of the optical member body 10 and a phase of reflection light generated at the surface 20a of the protective film 20 is not half (1/2) of the wavelength of the incident light, and the wavelength dependency of reflectivity of the optical member 1 is relatively large.

Hereinafter, the reflectivity of the optical member 1 and the wavelength dependency of the reflectivity can be changed by changing conditions such as the thickness $t_2$ of the protective film 20 and the like. This will be described further in detail referring to examples.

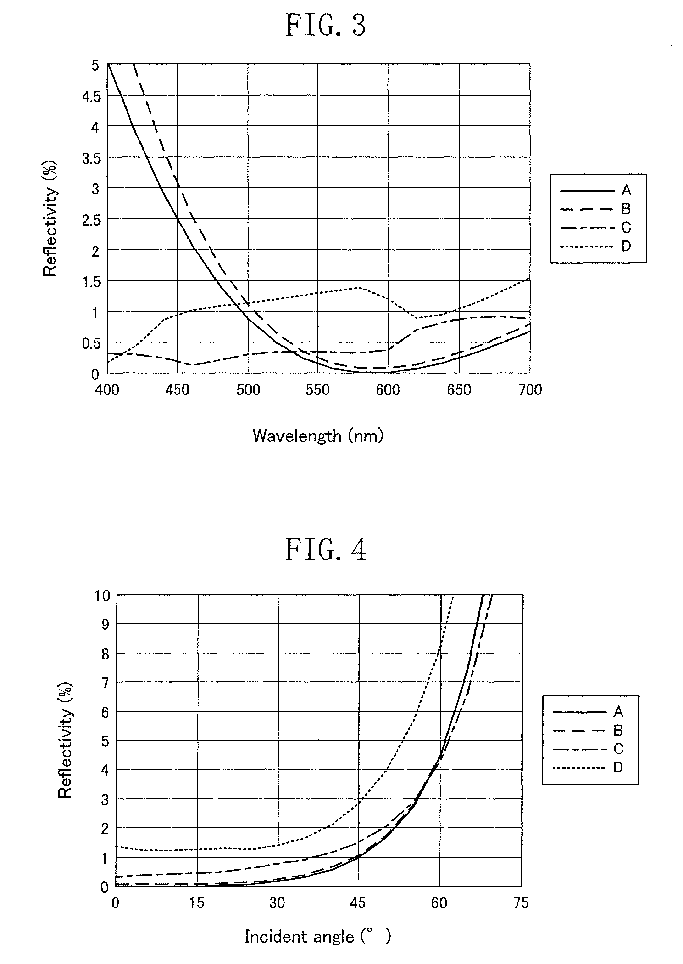

FIG. 3 is a graph showing the correlation between the reflectivity of the optical member 1 for incident light which enters the optical member 1 at an incident angle of 0° and a wavelength of the incident light, when a cycle A is 300 nm, a refractive index of the optical member body 10 for light having a wavelength of 589 nm is 2.00136, a refractive index of the protective film 20 for light having a wavelength of 589 nm is 1.37986, $t_1$ is 150 nm, $t_2$ is 110 nm and a diameter f of an apex of each convex portion 12 is 90.5 nm. Note that dispersion of the protective film 20 is defined by Formula (1) below. Also, dispersion of the optical member body 10 is defined by Formula (2) below.

[Formula 1]

$$n^2 - 1 = K_1 \lambda^2 / (\lambda^2 - L_1) + K_2 \lambda^2 / (\lambda^2 - L_2) + K_3 \lambda^2 / (\lambda^2 - L_3)$$

where
$K_1$ = 0.48755108,
$K_2$ = 0.39875031,
$K_3$ = 2.3120353,
$L_1$ = 0.00600069867,
$L_2$ = 0.00895188847,
$L_3$ = 566.135591

[Formula 2]

$$n^2 = a_0 + a_1 \lambda^2 + a_2 \lambda^{-2} + a_3 \lambda^{-4} + a_4 \lambda^{-6} + a_5 \lambda^{-8}$$

where
$a_0$ = 3.7871725,
$a_1$ = -0.020974414,
$a_2$ = 0.059258017,
$a_3$ = 0.0079700797,
$a_4$ = -0.00070884578, and
$a_5$ = 7.9345324e-005

FIG. 4 is a graph showing the correlation between the incident angle of incident light (having a wavelength of 589 nm) and reflectivity under the same condition as in FIG. 3.

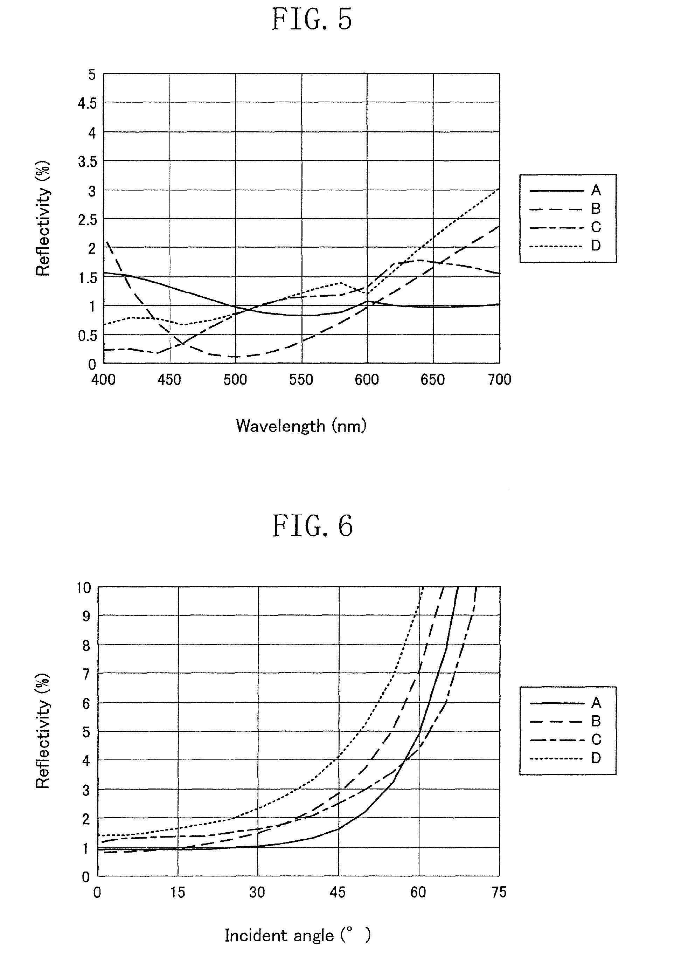

FIG. 5 is a graph showing the correlation between the reflectivity of the optical member 1 for incident light which enters the optical member 1 at an incident angle of 0° with a wavelength of the incident light, when a cycle A is 300 nm, a refractive index of the optical member body 10 for light having a wavelength of 589 nm is 2.00136, a refractive index of the protective film 20 for light having a wavelength of 589 nm is 1.37986, $t_1$ is 150 nm, $t_2$ is 140 nm and a diameter f of an apex of each convex portion 12 is 135 nm. Note that dispersion of the protective film 20 is defined by Formula (1) above. Also, dispersion of the optical member body 10 is defined by Formula (2) above.

FIG. 6 is a graph showing the correlation between the incident angle of incident light (having a wavelength of 589 nm) and the reflectivity under the same condition as in FIG. 5.

Note that in FIG. 3 through FIG. 6, a graph A indicates the reflectivity of the optical member 1 of Embodiment 1. A graph B indicates the reflectivity in the case where the SWS 11 is not provided and the protective film 20 is formed on the flat surface 10a. A graph C indicates the reflectivity in the case where the protective film 20 is not provided. A graph D indicates the reflectivity in the case where the protective film 20 is not provided and the height $t_1$ of the fine convex portions 12 is reduced to half.

The condition for the graph A shown in FIG. 3 and FIG. 4 is set so that when incident light having a wavelength of 589 nm enters the optical member 1, a difference between a phase of reflection light generated at the surface 10a of the optical member body 10 and a phase of reflection light generated at the surface 20a of the protective film 20 is half (1/2) of the wavelength of the incident light and a light intensity of the reflection light generated at the surface 10a and a light intensity of the reflection light generated at the surface 20a of the protective film 20 are approximately the same. By setting the condition in the above-described manner, as shown in FIG. 3 and FIG. 4, reflection of vertical incident light (i.e., incident light which enters the optical member 1 at an angle of 0°) having a wavelength of 589 nm can be substantially completely suppressed.

As shown in FIG. 4, when the protective film 20 is provided, reflection of incident light which enters the optical member 1 particularly at a small angle can be effectively suppressed, compared to the case where the protective film 20 is not provided (C and D). However, as shown in FIG. 3, there is a tendency that the wavelength dependency of reflectivity is larger than that in the case where the protective film 20 is not provided (C and D).

In contrast, under the condition for the graph A shown in FIG. 5 and FIG. 6, results are different from those in the case shown in FIG. 3 and the other cases. That is, as shown in FIG. 5, a wavelength at which the reflectivity of the optical member 1 is substantially zero does not exist but the wavelength dependency of the reflectivity can be further reduced. Under the condition shown in FIG. 5 and FIG. 6, the wavelength dependency of the reflectivity can be further reduced, compared to the case where the protective film 20 is not provided.

In Embodiment 1, an example of preferred embodiments of the present invention has been described using, as an example, the case where the optical member body 10 is light-transmissive to incident light. However, the present invention is not limited to such case. For example, the optical member body 10 may be light-absorptive, i.e., a so-called black body. In such case, the environmental resistance can be increased by providing the protective film 20. Moreover, light reflectivity can be more effectively reduced.

In Embodiment 1, an example where the convex portions 12 are squarely arranged in matrix has been described. However, the arrangement of the convex portions 12 is not limited thereto. For example, the convex portions 12 may be arranged in a triangular lattice (i.e., delta shape). The arrangement of the convex portions 12 is not particularly limited as long as the arrangement allows moderate change in refractive index in the superficial layer portion in which the convex portions 12 (the antireflection concave-convex structure 11) are formed.

Embodiment 1 has been described using, as an example, the case where the surface of the optical member 1 on which the SWS 11 is formed is flat. However, as will be described in the following embodiment, a shape of the surface on which the SWS 11 is provided is not particularly limited. Also, a shape of an optical member according to the present disclosure is not particularly limited.

(Modified Example 1)

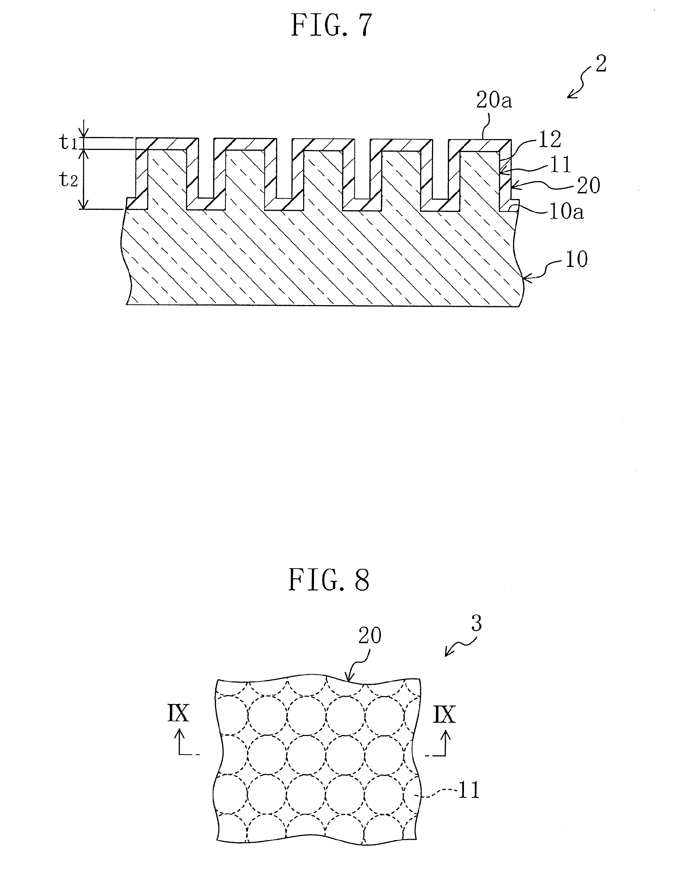

FIG. 7 is a cross-sectional view of an optical member 2 according to Modified Example 1.

Except for the structure of the protective film 20, the optical member 2 of Modified Example 1 has the same structure as the structure of the optical member 1 of Embodiment 1. Now, a structure of the protective film 20 according to Modified Example 1 will be described in detail. Note that in the description of Modified Example 1, each component having substantially the same function as that in Embodiment 1 is identified by the same reference numeral shown in Embodiment 1 and, therefore, the description thereof will be omitted.

In Embodiment 1, the protective film 20 has a relatively large thickness and is formed so that it can fill each concave portion between the plurality of convex portions 12 and also the surface 20a thereof is a smooth surface (for example, flat smooth surface). However, the present invention is not limited to this structure. For example, as in Modified Example 2, the protective film 20 may be formed so as to have a relatively small thickness and a shape along the antireflection concave-convex structure 11. That is, concaves and convexes corresponding to the antireflection concave-convex structure 11 may be formed on the surface 20a. Even in such case, as in Embodiment 1, a high chemical resistance can be achieved. Also, a higher mechanical resistance than a mechanical resistance in the case where the protective film 20 is not provided can be achieved.

The reflectivity can be more effectively reduced and the wavelength dependency of the reflectivity can be reduced by appropriately adjusting the thickness of the protective film 20 and the shape of the convex portions 12, as in Embodiment 1.

(Embodiment 2)

FIG. 8 is a plan view of an optical member 3 according to Embodiment 2 of the present invention.

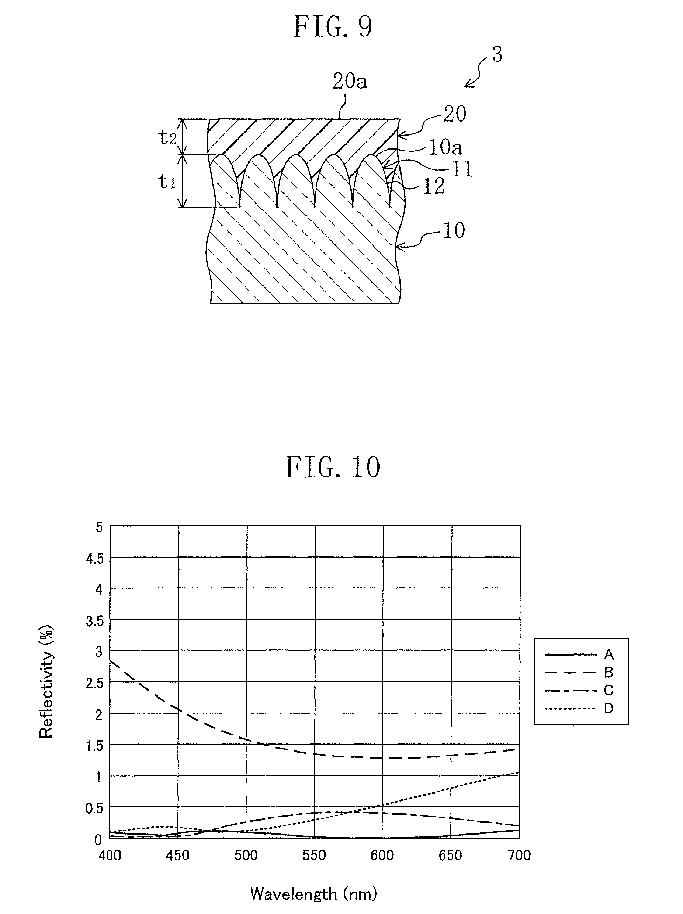

FIG. 9 is a cross-sectional view of part taken along a cut out line IX-IX of FIG. 8.

Except for the shape of the antireflection concave-convex structure 11, the optical member 3 of Embodiment 2 has the same structure as the optical member 1 of Embodiment 1. Now, the shape of the antireflection concave-convex structure 11 will be described in detail. Note that in the description of Embodiment 2, each component having substantially the same function as that in Embodiment 1 is identified by the same reference numeral shown in Embodiment 1 and, therefore, the description thereof will be omitted.

As shown in FIG. 8 and FIG. 9, in Embodiment 2, an antireflection concave-convex structure (SWS) 11 is formed of a plurality of domal convex portions 12 which are regularly arranged in a matrix so as to be close to one another. As in Embodiment 2, a refractive index of superficial layer part can be more moderately changed by forming the antireflection concave-convex structure 11 of a plurality of domal convex portions 12, compared to the case where the antireflection concave-convex structure 11 is formed of a plurality of column convex portions 12. Also, incident light is diffusely reflected at the surface 10a. Accordingly, a reflectivity at the surface 10a can be further reduced.

Moreover, the wavelength dependency of reflectivity of the optical member 3 can be further reduced. Furthermore, the incident angle dependency of the reflectivity of the optical member 3 can be further reduced. Accordingly, a high antireflection effect for incident light which enters the optical member 3 at a relatively large incident angle can be achieved.

In Embodiment 2, the reflectivity of the optical member body 10 at the surface 10 correlates with the height of the convex portions 12 formed on the surface 10a. Specifically, there is a tendency that the larger the height of the convex portions 12 is, the lower the reflectivity becomes, and the smaller the height of the convex portions 12 is, the higher the reflectivity becomes. As described above, when the protective film 20 formed of a low refractive index material is provided, the reflectivity ("reflectivity of an optical member" means an intensity of reflection light (composite light of reflection light generated at the surface 1a and reflection light generated at the surface 20a) emitted from the surface 20a with respect to an intensity of light which enters the surface 10a) of the optical member 3 can be reduced. Therefore, a desired low reflectivity can be achieved by providing the protective film 20 even when the height of the convex portions 12 is low. That is, when the protective film 20 is provided, the convex portions 12 can be formed so as to have a relatively small height, and fabrication of the optical member 3 can be simplified.

Hereinafter, an antireflection effect of the optical member 3 of Embodiment 2 will be specifically described with reference to another specific example.

FIG. 10 is a graph showing the correlation between the reflectivity of the optical member 3 for incident light which enters the optical member 3 at an incident angle of 0° and a wavelength of the incident light, when a cycle A is 300 nm, a refractive index of the optical member body 10 for light having a wavelength of 589 nm is 1.51674, a refractive index of the protective film 20 for light having a wavelength of 589 nm is 1.10000, $t_1$ is 150 nm, $t_2$ is 40 nm and each convex portion 12 is formed so as to have a shape along $y = -ax^2$ (where a is an arbitrary constant). Assume that a Y axis extends along a normal direction of a base surface of the surface 10a and an X axis extends in a direction perpendicular to the Y axis in a cross section passing through a center axis of a convex portion 12. It is also assume that the refractive index of the protective film 20 does not have wavelength dependency.

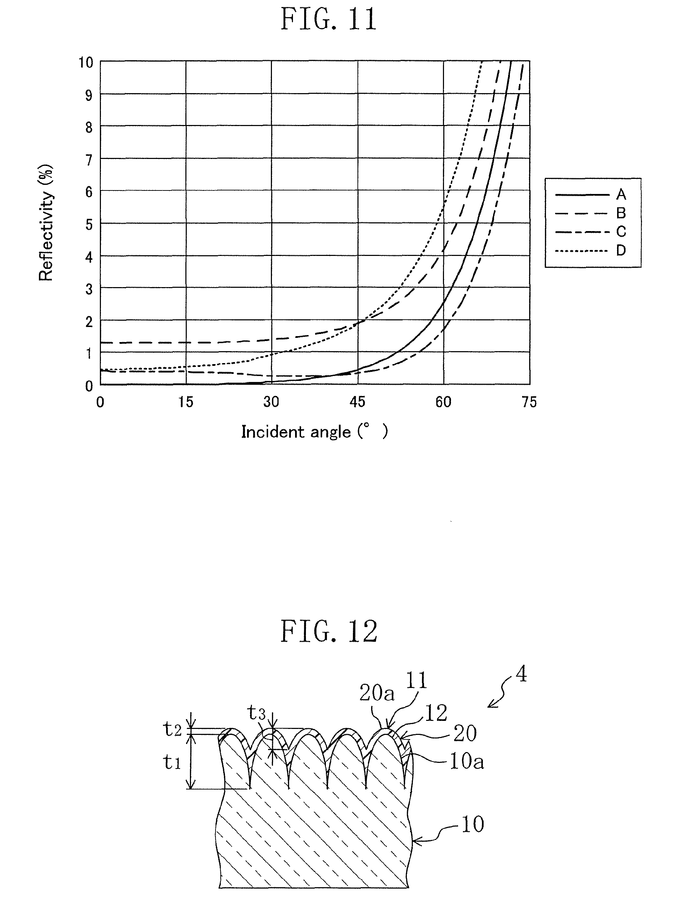

FIG. 11 is a graph showing the correlation between an incident angle of incident light (having a wavelength of 589 nm) and reflectivity under the same condition as in FIG. 10.

Note that in FIG. 10 and FIG. 11, a graph A indicates the reflectivity of the optical member 3 of Embodiment 2. A graph B indicates the reflectivity in the case where the SWS 11 is not provided and the protective film 20 is formed on the flat surface 10a. A graph C indicates the reflectivity in the case where the protective film 20 is not provided. A graph D indicates the reflectivity in the case where the protective film 20 is not provided and the height $t_1$ of the convex portions 12 is reduced to half.

As shown in FIG. 10, with the structure of Embodiment 2, the reflectivity of the optical member 3 and its wavelength dependency can be more effectively reduced. As shown in FIG. 11, the incident angle dependency of the reflectivity of the optical member 3 can be also more effectively reduced, and the reflectivity for incident light which enters the optical member 3 at a relatively large incident angle can be also effectively reduced.

(Modified Example 2)

FIG. 12 is a cross-sectional view of an optical member 4 according to Modified Example 2.
FIG. 13 is a graph showing the correlation between the reflectivity of the optical member 4 for incident light which enters the optical member 3 at an incident angle of 0° and a wavelength of the incident light, when a cycle A is 300 nm, a refractive index of the optical member body 10 for light having a wavelength of 589 nm is 2.00136, a refractive index of the protective film 20 for light having a wavelength of 589 nm is 1.49169, $t_1$ is 300 nm, $t_2$ is 89 nm, $t_3$ is 243 nm and each convex portion 12 is formed so as to have a shape along $y = -ax^2$ (where a is an arbitrary constant). Note that dispersion of the protective film 20 is defined by Formula (3) below. Also, dispersion of the optical member body 10 is defined by Formula (4) below.

[Formula 3]

$$n^2 = a_0 + a_1\lambda^2 + a_2\lambda^{-2} + a_3\lambda^{-4} + a_4\lambda^{-6} + a_5\lambda^{-8}$$

where
$a_0$ = 2.1864582,
$a_1$ = -0.00024475348,
$a_2$ = 0.014155787,
$a_3$ = -0.00044329781,
$a_4$ = 7.7664259e-005, and
$a_5$ = -2.9936382e-006

[Formula 4]

$$n^2 = a_0 + a_1\lambda^2 + a_2\lambda^{-2} + a_3\lambda^{-4} + a_4\lambda^{-6} + a_5\lambda^{-8}$$

where
$a_0$ = 3.7871725,
$a_1$ = -0.020974414,
$a_2$ = 0.059258017,
$a_3$ = 0.0079700797,
$a_4$ = -0.00070884578, and
$a_5$ = 7.9345324e-005
FIG. 14 is a graph showing the correlation between an incident angle of incident light (having a wavelength of 589 nm) and reflectivity under the same condition as in FIG. 13.
Note that in FIG. 13 and FIG. 14, a graph A indicates the reflectivity of the optical member 4 of Modified Example 2. A graph B indicates the reflectivity in the case where the SWS 11 is not provided and the protective film 20 is formed on the flat surface 10a. A graph C indicates the reflectivity in the case where the protective film 20 is not provided. A graph D indicates the reflectivity in the case where the protective film 20 is not provided and the height $t_1$ of the convex portions 12 is reduced to half.
Except for the structure of the protective film 20, the optical member 4 of Modified Example 2 has the same structure as the structure of the optical member 3 of Embodiment 2. Now, a structure of the protective film 20 according to Modified Example 2 will be described in detail. Note that in the description of Modified Example 2, each component having substantially the same function as that in Embodiments 1 and 2 is identified by the same reference numeral shown in Embodiments 1 and 2 and, therefore, the description thereof will be omitted.

In Embodiment 2, the protective film 20 has a relatively large thickness and is formed so that it can fill each concave portion between the plurality of convex portions 12 and also the surface 20a thereof is a smooth surface (for example, flat smooth surface). However, the present invention is not limited to this structure. For example, as in Modified Example 2, the protective film 20 may be formed so as to have a relatively small thickness and a shape along the antireflection concave-convex structure 11. That is, concaves and convexes corresponding to the antireflection concave-convex structure 11 may be formed on the surface 20a. Even in such case, as in Embodiment 2, a high chemical resistance can be achieved. Also, a higher mechanical resistance than a mechanical resistance in the case where the protective film 20 is not provided can be achieved.

As shown in FIG. 13 and FIG. 14, the reflectivity can be more effectively reduced and the wavelength dependency of the reflectivity can be reduced by appropriately adjusting the thickness of the protective film 20 and the shape of the convex portions 12, as in Embodiment 1.

Next, an optical device using an optical member in which the present invention is implemented will be described with reference to Embodiments 3 and 4 as examples.

(Embodiment 3)

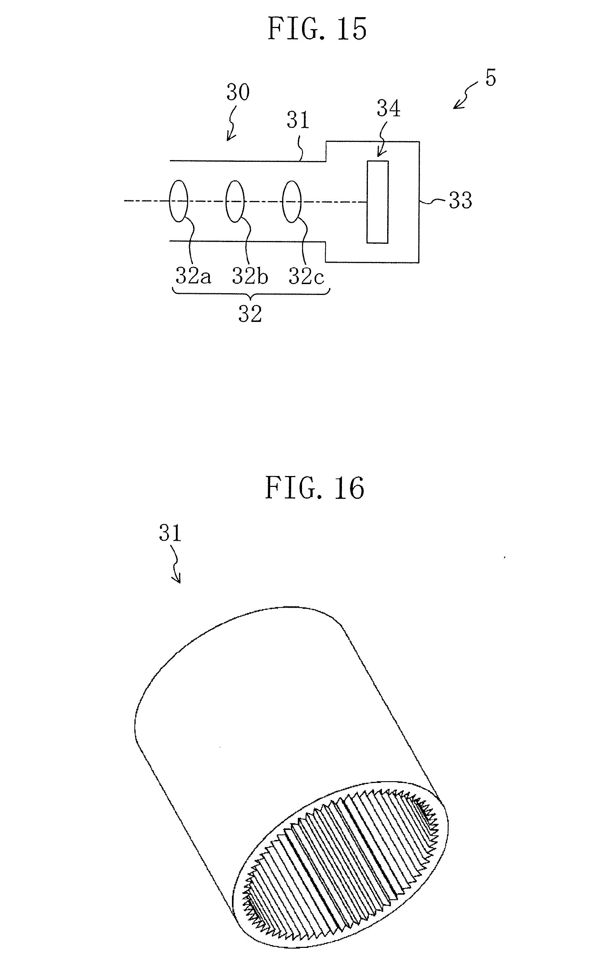

FIG. 15 is a diagram illustrating a configuration of major part of an imaging device 5 according to Embodiment 3 of the present invention.

As shown in FIG. 15, the imaging device 5 of Embodiment 3 includes a device body 33, a lens tube unit 30 and an imaging element 34. The lens tube unit 30 includes a lens tube 31 having a tubular shape (specifically, having a cylindrical shape) and an image formation optical system 32 placed in the lens tube 31. The image formation optical system 32 is provided to form an image of incident light entering the lens tube 31 from an image side (i.e., a left side in FIG. 15). Specifically, in Embodiment 3, the image formation optical system 32 is formed of a first lens 32a, a second lens 32b and a third lens 32c. Note that each of the lenses 32a through 32c constituting the image formation optical system 32 may be arranged at a point of an optical axis so as not to be displaceable. Moreover, the lenses 32a through 32c may be formed so that at least one of the lenses is displaceable along the optical axis to perform focusing and reducing/enlarging an image.

The lens tube unit 30 is attached to the device body 33. The lens tube unit 30 may be removable from the device body 33 or may be unremovable from the device body 33.

In the device body 33, an imaging element 34 is provided. The imaging element 34 is arranged at a point of the optical axis of the image formation optical system 32. Specifically, the imaging element 34 has an imaging surface and is arranged so that an optical image is formed on the imaging surface by the image formation optical system 32. The imaging element 34 has a function as an optical detector. Specifically, the imaging element 34 has the function of detecting a formed optical image and outputting an electrical signal corresponding to the optical image. The imaging element 34 can be formed of, for example, a CCD (charge coupled device), a COMS (complementary metal-oxide semiconductor) or the like.

In Embodiment 3, an electrical signal output from the imaging element 34 is input to a recording device (for example, hard disk or the like) which is placed in the device body 33 and is not shown in FIG. 15, and is recorded in the recording device.

FIG. 16 is a perspective view of a lens tube 31.

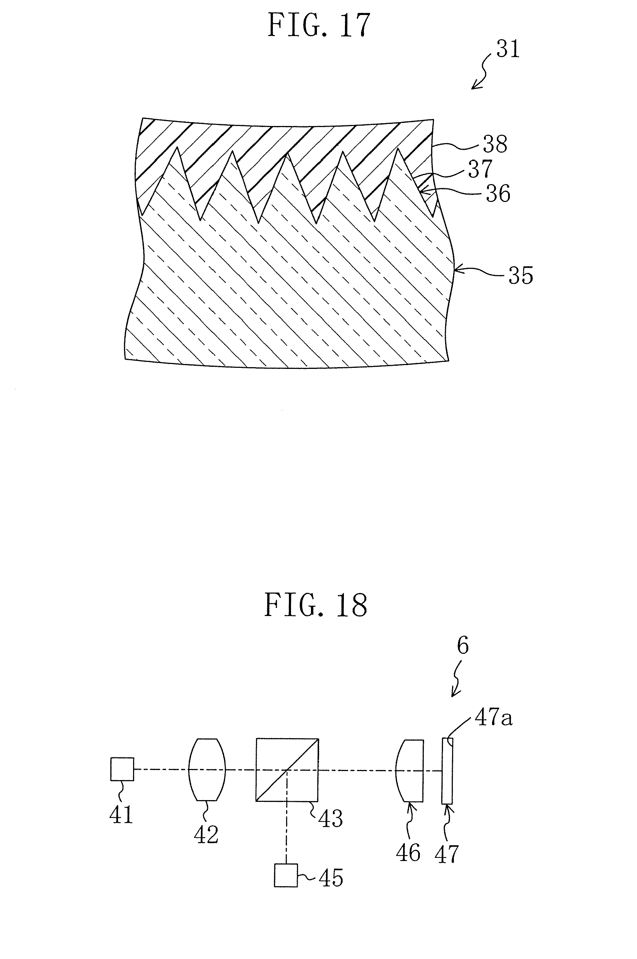

FIG. 17 is an enlarged cross-sectional view of part of the lens tube 31.

In principle, the image formation optical system 32 is designed so that incident light entering the image formation optical system 32 is formed into an image on the imaging element 34. However, part of incident light entering the image formation optical system 32, such as light of which an incident angle is equal to or larger than a maximum field angle of the image formation optical system 32 and the like, comes into an interior surface of the lens tube 31 without being formed into an image on the imaging element 34. Therefore, when light reflectivity at the interior surface of the lens tube 31 is high, reflection light (stray light) might be generated at the interior surface and cause a ghost image, flare and the like.

In Embodiment 3, the lens tube 31 is formed of a lens tube body 35 formed so as to have a tubular shape and a protective film 38 which is formed so as to cover an interior surface of the lens tube body 35 and transmits visible light. An antireflection concave-convex structure (which is so-called SWS) 36 is formed on the entire interior surface of the lens tube body 35. The antireflection concave-convex structure 36 is formed of a plurality of fine filiform convex portions 37 each of which extends along a direction in which the lens tube 31 extends and which are regularly arranged along the interior surface. Specifically, the plurality of filiform convex portions 37 are arranged with a pitch (which herein means a distance between respective apex portions of every adjacent two of the filiform convex portions 37) equal to or smaller than a wavelength of light coming from the image formation optical system 32. For example, as a specific example, assume that visible light (having a wavelength of 400 nm or more and 700 nm or less) enters the image formation optical system 32. In the image formation optical system 32, the filiform convex portions 37 are arranged at a pitch equal to or smaller than the smallest wavelength of light (for example, light having a wavelength of 450 nm or more when the imaging element 34 is designed so as not to detect light having a wavelength of 450 nm or less) whose reflection is desired to be suppressed, and the light is included in the incident light entering the image formation optical system 32.

Also, the lens tube body 35 is formed so as to absorb light coming from the image formation optical system 32. Specifically, the lens tube body 35 includes a light absorbing material (for example, a black dye, a black pigment or the like). Thus, reflection of incident light at the interior surface is sufficiently suppressed and the incident light entering the lens tube 31 is absorbed by the lens tube body 35 at a high absorptance. Accordingly, the generation of stray light due to reflection light at the interior surface and the like can be suppressed. As a result, the generation of a ghost image, flare and the like can be effectively suppressed, so that the imaging device 5 having a high optical performance can be realized.

In Embodiment 3, as shown in FIG. 17, the protective film 38 is formed on the antireflection concave-convex structure 36 so as to cover the antireflection concave-convex structure 36, and thus a high environmental resistance can be achieved, as described in Embodiment 1. Moreover, a more moderate refractive index distribution can be achieved in superficial part of the lens tube 31 located in the vicinity of the interior surface thereof, and thus the generation of reflection light at the lens tube 31 can be more effectively suppressed. Therefore, a high optical performance of the imaging device 5 can be realized.

In view of effectively realizing a high optical performance, a surface of the interior surface of the lens tube 31 on which the antireflection concave-convex structure 36 is to be formed is preferably a rough surface. Thus, the incident angle dependency of the reflectivity at the interior surface can be further reduced and specular reflection components can be more effectively reduced.

(Embodiment 4)

FIG. 18 is a diagram illustrating a configuration of major part of an optical pickup system 6 according to Embodiment 4 of the present invention.

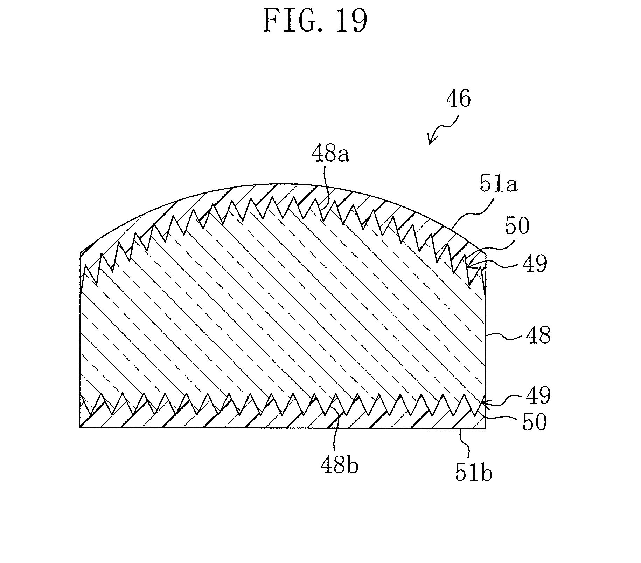

FIG. 19 is a cross-sectional view of an objective lens 46.

The optical pickup system 6 of Embodiment 4 is configured so that laser light is focused on an information recording surface 47a of an information recording medium (for example, an optical disc or the like) 47 and reflection light at the information recording surface 47a is detected and thereby perform reading of information recorded on the information recording surface 47a.

The optical pickup system 6 includes a laser light source 41, a collimator 42, a beam splitter 43, an objective lens 46 constituting an objective optical system and a detector 45. The collimator 42 has a function of converting a laser beam output from the laser light source 41 into collimated light. Collimated laser light obtained through conversion by the collimator 42 is transmitted through the beam splitter 43 and enters the objective lens 46. The objective lens 46 is provided to focus laser light on the information recording surface 47a of the information recording medium 47 set therein. Focused laser light by the objective lens 46 is reflected by the information recording surface 47a. The reflection light is transmitted through the objective lens 46 and enters the beam splitter 43. The reflection light is reflected by a reflection surface provided in the beam splitter 43 and is guided to the detector 45. In the detector 45, reflection light is detected and data is read out based on the detected reflection light.

Note that in Embodiment 4, an example of the present invention is described using, as an example, the optical pickup system 6 of a type in which focusing of laser light is performed to a single type of the information recording medium 47. However, for example, the disclosure of the present invention can be applied to a so-called multi-compatible type in which laser light can be focused on each of a plurality types of the information recording medium 47.

As has been described, laser light entering the objective lens 46 is transmitted through the objective lens 46. However, if each of both surfaces of the objective lens 46 is not antireflection-processed, part of laser light is reflected at both of the lens surfaces. When part of laser light is reflected at both of the lens surfaces, a light intensity of laser light detected in the detector 45 is reduced, thus resulting in reduction in detection accuracy. As a result, noise and the like might occur.

In Embodiment 4, the objective lens 46 includes a lens body 48 and protective films 51a and 51b provided on both lens surfaces of the lens body 48, respectively, so as to cover the lens surfaces. Moreover, an antireflection concave-convex structure 49 formed of a plurality of fine cone convex portions 50 regularly arranged is provided at least in an optical effective diameter of a lens surface 48a of the lens body 48 located at the laser light source 41 side. Specifically, the plurality of the cone convex portions 50 are arranged (in a square array or a triangular lattice) with a pitch (i.e., a distance between respective apexes of adjacent two of the cone convex portions 50) equal to or smaller than a wavelength of laser light output from the laser light source 41.

Also, an antireflection concave-convex structure 49 formed of a plurality of fine cone convex portions 50 regularly arranged therein is provided at least in an optical effective diameter of a lens surface 48b of the lens body 48 located at the information recording medium 47 side. Specifically, a plurality of the cone convex portions 50 are arranged (in a square array or a triangular lattice) with a pitch (i.e., a distance between respective apexes of adjacent two of the cone convex portions 50) equal to or smaller than a wavelength of laser light output from the laser light source 41.

Thus, reflection of laser light at both of the lens surfaces of the objective lens 46 can be suppressed. As a result, a light intensity of laser light detected in the detector 45 can be made relatively large and the generation of noise can be effectively suppressed. Therefore, the optical pickup device 6 having a high optical performance can be achieved.

In Embodiment 4, the protective films 51a and 51b are formed on both of the lens surfaces of the lens body 48, respectively, so as to cover the antireflection concave-convex structure 49. Thus, as described in Embodiment 1, a high environmental resistance and a high antireflection effect can be achieved. Therefore, the optical pickup system 6 having a higher optical performance can be achieved.

Note that a pitch of the antireflection concave-convex structure 49 may be approximately constant (i.e., cyclic) entirely in the optical effective diameter on each of the lens surfaces 48a and 48b as long as the pitch of the antireflection concave-convex structure 49 is equal to or smaller than a wavelength of laser light. Also, the pitch of the antireflection concave-convex structure 49 may be different between different parts in the optical effective diameter on each of lens surfaces 48a and 48b. That is, the antireflection concave-convex structure 49 may be non-cyclic. When the antireflection concave-convex structure 49 is formed to be non-cyclic, the generation of diffraction light at the lens surfaces 48a and 48b can be effectively suppressed.

In Embodiments 3 and 4, an optical device including an optical member in which the present disclosure is implemented has been described using, as examples, an imaging device and an optical pickup system. The present invention is applicable to various other optical devices such as an optical scanning system and the like.

INDUSTRIAL APPLICABILITY

An optical member according to the present disclosure has an antireflection effect and a high environmental resistance and is useful as a lens tube, an optical element represented by a lens and the like. With use of an optical member according to the present disclosure, various types of optical systems such as high quality image formation optical system, objective optical system, scanning optical system, pickup optical system and the like, various types optical units such as lens tube unit, optical pickup unit, imaging unit and the like, an imaging device, an optical pickup device, an optical scanning device and the like can be achieved.

**Claims**

1.    An optical member comprising:

       an optical member body whose surface is configured to be an antireflection concave-convex structure for suppressing reflection of incident light, formed of a plurality of fine convex or concave portions regularly arranged; and
       a protective film covering the surface and transmitting the incident light.

2.    The optical member of claim 1, wherein the optical member body is substantially formed of glass and the protective film is substantially formed of resin.

3.    The optical member of claim 1, wherein the protective film has a higher chemical resistance than that of the optical member body.

4.    The optical member of claim 1, wherein the optical member body transmits the incident light and a refractive index of the protective film for a wavelength of the incident light is lower than that of the optical member body.

5.    The optical member of claim 1, wherein a surface of the protective film is formed to be a smooth surface.

6.    The optical member of claim 1, wherein convexes and concaves corresponding to the antireflection concave-convex structure are formed on a surface of the protective film.

7.    The optical member of claim 1, wherein the protective film is formed so as to have a thickness which causes a phase difference between reflection light generated at a surface of the protective film and reflection light generated at the surface of the optical member body by half of a wavelength of the incident light.

8.    The optical member of claim 7, wherein the antireflection concave-convex structure is formed so that an intensity of the reflection generated at the surface of the optical member body and an intensity of the reflection light generated at the surface of the protective film are substantially equal to each other.

9. The optical member of claim 1, wherein the antireflection concave-convex structure is formed of a plurality of filiform convex or concave portions arranged in parallel to one another, a plurality of cone convex or concave portions arranged, a plurality of truncated cone/pyramid portions arranged, or a plurality of column portions arranged.

10. An optical device comprising the optical member of claim 1.

# FIG. 1

# FIG. 2

# FIG. 3

Wavelength (nm)

# FIG. 4

Incident angle (° )

# FIG. 5

# FIG. 6

FIG. 7

FIG. 8

# FIG. 9

# FIG. 10

# FIG. 11

# FIG. 12

## FIG. 13

## FIG. 14

# FIG. 15

# FIG. 16

# FIG. 17

# FIG. 18

## FIG. 19

**INTERNATIONAL SEARCH REPORT**

| International application No. |
| --- |
| PCT/JP2007/062408 |

A.   CLASSIFICATION OF SUBJECT MATTER
*G02B1/11*(2006.01)i, *G02B5/02*(2006.01)i, *G02B7/02*(2006.01)i

According to International Patent Classification (IPC) or to both national classification and IPC

B.   FIELDS SEARCHED

Minimum documentation searched (classification system followed by classification symbols)
G02B1/11, G02B5/02, G02B7/02

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2003-075604 A  (Nitto Denko Corp.),<br>12 March, 2003 (12.03.03),<br>Full text; all drawings<br>(Family: none) | 1-4,6-10<br>5 |
| X<br>Y | JP 2001-264520 A  (Dainippon Printing Co.,<br>Ltd.),<br>26 September, 2001 (26.09.01),<br>Full text; all drawings<br>& US 2002/0044356 A1    & US 2006/0050387 A1 | 1,3-5,9,10<br>2,6-8 |
| A | JP 2002-333502 A  (Dainippon Printing Co.,<br>Ltd.),<br>22 November, 2002 (22.11.02),<br>Full text; all drawings<br>(Family: none) | 9,10 |

☒   Further documents are listed in the continuation of Box C.      ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>     06 August, 2007 (06.08.07) | Date of mailing of the international search report<br>     21 August, 2007 (21.08.07) |
| --- | --- |
| Name and mailing address of the ISA/<br>     Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/062408 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-135899 A  (Omron Corp.), 26 May, 2005 (26.05.05), Full text; all drawings & US 2005/0099792 A1    & EP 1522881 A1 | 9,10 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2001127852 A